# EUROPEAN PATENT APPLICATION

(11) **EP 4 686 241 A1**
(43) Date of publication of application: **28.01.2026**
(21) Application number: 24773868.5
(22) Date of filing: 26.02.2024
(51) Int. Cl.: H04W 8/22

(54) **MESSAGE TRANSMISSION METHOD AND APPARATUS, AND STORAGE MEDIUM**

(30) Priority: 23.03.2023 CN 202310297192
(71) Applicant: Datang Mobile Communications Equipment Co., Ltd., Beijing 100085 (CN)
(72) Inventor: CAO, Caihong, Beijing 100085 (CN); XIONG, Chunshan, Beijing 100085 (CN); XU, Hui, Beijing 100085 (CN); WANG, Ke, Beijing 100085 (CN)
(74) Representative: Studio Torta S.p.A.
(86) International application number: PCT/CN2024/078598
(87) International publication number: WO 2024/193300

(57) **Abstract**

A message transmission method and apparatus, and a storage medium, where the method includes: storing first data, where the first data includes: a first network service type and a first target identifier corresponding to the first network type, where the first target identifier is an identifier, which is allocated by a first core network element for the terminal, oriented to the first network service type, where the first target identifier is carried when the terminal initiates a request corresponding to the first network type. The present disclosure may improve the transmission efficiency of NAS messages.

## Description

This application claims priority to Chinese Patent Application No. 202310297192.6, filed with the China National Intellectual Property Administration on March 23, 2023 and entitled "Message Transmission Method and Apparatus, and Storage Medium", which is incorporated herein by reference in its entirety.

### TECHNICAL FIELD

The present disclosure relates to the field of communication, and in particular, to a message transmission method and apparatus, and a storage medium.

### BACKGROUND

The current network system is composed of a terminal, a radio access network, and acore network. Where the terminal and an AMF (Access and Mobility Management Function, Access and Mobility Management Function) device in the core network transmit a NAS (Non-Access Stratum, Non-Access Stratum Protocol) message through a N1 interface, and the message is then forwarded by the AMF device to other network element devices in the core network. After the RAN is service-based, the RAN can directly interact with each network element in the core network, and the message is directly sent to the corresponding network element by the RAN, with no need to go through the AMF. How the RAN transmits messages from the terminal to the corresponding network element remains a problem to be solved.

### SUMMARY

The present disclosure provides a message transmission method and apparatus, and a storage medium, to enable a RAN to transmit messages from a terminal to a corresponding network element.

In a first aspect, the present disclosure provides a message transmission method, applied to the terminal, where the message transmission method includes: storing first data, where the first data includes: a first network service type and a first target identifier corresponding to the first network type, where the first target identifier is an identifier, which is allocated by a first core network element for the terminal, oriented to the first network service type, where the first target identifier is carried when the terminal initiates a request corresponding to the first network type.

In a second aspect, the present disclosure provides a message transmission method, applied to a radio access network, where the message transmission method includes: receiving a second uplink message sent by a terminal, where the second uplink message carries a first target identifier, a first network service type and a second non-access stratum message, where the second non-access stratum message carries the first target identifier, the radio access network is used for transparent transmission of a non-access stratum message, and the first target identifier is allocated by a first core network element for the terminal; determining the first core network element according to the first target identifier and the first network service type; and sending the second non-access stratum message to the first core network element, where the first target identifier is used for the first core network element to determine the terminal.

In a third aspect, the present disclosure provides a message transmission method, applied to a first core network element, where the message transmission method includes: receiving a first non-access stratum message sent by a radio access network, where the first non-access stratum message is sent after the radio access network receives a first uplink message from a terminal, the first uplink message carries a first network service type and a first non-access stratum message, and the first network service type is used to indicate the radio access network to determine a first core network element corresponding to the first network service type; allocating a first target identifier for the terminal according to the first non-access stratum message; and sending a first downlink message to the terminal through the radio access network, where the first downlink message carries a target access stratum message, where the target access stratum message carries first data, where the first data includes: a first target identifier and a first network service type, where the first downlink message is used to indicate the terminal to store the first data.

In a fourth aspect, the present disclosure provides a message transmission apparatus, applied to a terminal, where the message transmission apparatus includes:
a storing module, configured to store first data, where the first data includes: a first network service type and a first target identifier corresponding to the first network type, where the first target identifier is an identifier, which is allocated by a first core network element for the terminal, oriented to the first network service type, where the first target identifier is carried when the terminal initiates a request corresponding to the first network type.

In a fifth aspect, the present disclosure provides a message transmission apparatus, applied to a radio access network, where the message transmission apparatus includes:
a receiving module, configured to receive a second uplink message sent by a terminal, where the second uplink message carries a first target identifier, a first network service type and a second non-access stratum message, where the second non-access stratum message carries the first target identifier, the radio access network is used for transparent transmission of a non-access stratum message, and the first target identifier is allocated by a first core network element for the terminal;
a determining module, configured to determine the first core network element according to the first target identifier and the first network service type;
a sending module, configured to send the second non-access stratum message to the first core network element, where the first target identifier is used for the first core network element to determine the terminal.

In a sixth aspect, the present disclosure provides a message transmission apparatus, applied to a first core network element, where the message transmission apparatus includes:
a receiving module, configured to receive a first non-access stratum message sent by a radio access network, where the first non-access stratum message is sent after the radio access network receives a first uplink message from a terminal, the first uplink message carries a first network service type and a first non-access stratum message, and the first network service type is used to indicate the radio access network to determine a first core network element corresponding to the first network service type;
an allocating module, configured to allocate a first target identifier for the terminal according to the first non-access stratum message;
a sending module, configured to send a first downlink message to the terminal through the radio access network, where the first downlink message carries a target access stratum message, where the target access stratum message carries first data, where the first data includes: a first target identifier and a first network service type, where the first downlink message is used to indicate the terminal to store the first data.

In a seventh aspect, the present disclosure provides a message transmission apparatus, applied to a terminal, where the message transmission apparatus includes a memory, a transceiver, and a processor;
where the memory is configured to store a computer program;
the transceiver is configured to send and receive data under a control of the processor;
the processor is configured to read the computer program in the memory and perform following operations:
   storing first data, where the first data includes: a first network service type and a first target identifier corresponding to the first network type, where the first target identifier is an identifier, which is allocated by a first core network element for the terminal, oriented to the first network service type, where the first target identifier is carried when the terminal initiates a request corresponding to the first network type.

In an eighth aspect, the present disclosure provides a message transmission apparatus, applied to a radio access network, where the message transmission apparatus includes a memory, a transceiver, and a processor;
where the memory is configured to store a computer program;
the transceiver is configured to send and receive data under a control of the processor;
the processor is configured to read the computer program in the memory and perform following operations:
   receiving a second uplink message sent by a terminal, where the second uplink message carries a first target identifier, a first network service type and a second non-access stratum message, where the second non-access stratum message carries the first target identifier, the radio access network is used for transparent transmission of a non-access stratum message, and the first target identifier is allocated by a first core network element for the terminal;
   determining the first core network element according to the first target identifier and the first network service type;
   sending the second non-access stratum message to the first core network element, where the first target identifier is used for the first core network element to determine the terminal.

In a ninth aspect, the present disclosure provides a message transmission apparatus, applied to a first core network element, where the message transmission apparatus includes a memory, a transceiver, and a processor;
where the memory is configured to store a computer program;
the transceiver is configured to send and receive data under a control of the processor;
the processor is configured to read the computer program in the memory and perform following operations:
   receiving a first non-access stratum message sent by a radio access network, where the first non-access stratum message is sent after the radio access network receives a first uplink message from a terminal, the first uplink message carries a first network service type and a first non-access stratum message, and the first network service type is used to indicate the radio access network to determine a first core network element corresponding to the first network service type;
   allocating a first target identifier for the terminal according to the first non-access stratum message;
   sending a first downlink message to the terminal through the radio access network, where the first downlink message carries a target access stratum message, where the target access stratum message carries first data, where the first data includes: a first target identifier and a first network service type, where the first downlink message is used to indicate the terminal to store the first data.

In a tenth aspect, the present disclosure provides a processor-readable storage medium, where the processor-readable storage medium stores a computer program, and the computer program is used to cause the processor to execute the message transmission method provided by any one of the first aspect to the third aspect.

In an eleventh aspect, the present disclosure provides a computer program product including instructions which, when run in a computer, cause the computer to execute the message transmission method provided by any one of the first aspect to the third aspect.

According to the message transmission method and apparatus, and the storage medium applied to the terminal provided by the present disclosure, where the message transmission method includes: storing first data, where the first data includes: a first network service type and a first target identifier corresponding to the first network type, where the first target identifier is an identifier, which is allocated by a first core network element for the terminal, oriented to the first network service type, where the first target identifier is carried when the terminal initiates a request corresponding to the first network type. The present disclosure may enable the RAN to transmit the message from the terminal to the corresponding network element.

It should be understood that the contents described in this SUMMARY are not intended to define critical or significant features of embodiments of the present disclosure, nor is it intended to limit the scope of the present disclosure. Other features of the present disclosure will be made easier to understand by the following description.

### BRIEF DESCRIPTION OF DRAWINGS

In order to illustrate technical solutions of the present disclosure or in the prior art more clearly, the drawings needed in the description of embodiments or in the prior art will be briefly introduced below. Apparently, the drawings in the following description are only a part of embodiments of the present disclosure. For persons of ordinary skill in the art, other drawings can be obtained according to these drawings without paying creative effort.
FIG. 1 is a schematic diagram of a network system architecture in the prior art provided by the present disclosure.
FIG. 2 is a schematic diagram of an existing NAS message transmission method provided by an embodiment of the present disclosure.
FIG. 3 is a flowchart of a first message transmission method provided by an embodiment of the present disclosure.
FIG. 4 is a schematic diagram of a second message transmission method provided by an embodiment of the present disclosure.
FIG. 5 is a schematic diagram of a third message transmission method provided by an embodiment of the present disclosure.
FIG. 6 is a schematic diagram of a fourth message transmission method provided by an embodiment of the present disclosure.
FIG. 7 is a schematic diagram of a fifth message transmission method provided by an embodiment of the present disclosure.
FIG. 8 is a schematic diagram of a sixth message transmission method provided by an embodiment of the present disclosure.
FIG. 9 is a schematic diagram of a seventh message transmission method provided by an embodiment of the present disclosure.
FIG. 10 is a flowchart of an eighth message transmission method provided by an embodiment of the present disclosure.
FIG. 11 is a flowchart of a ninth message transmission method provided by an embodiment of the present disclosure.
FIG. 12 is a flowchart of a tenth message transmission method provided by an embodiment of the present disclosure.
FIG. 13 is a flowchart of an eleventh message transmission method provided by an embodiment of the present disclosure.
FIG. 14 is a flowchart of a first message transmission apparatus provided by an embodiment of the present disclosure.
FIG. 15 is a flowchart of a second message transmission apparatus provided by an embodiment of the present disclosure.
FIG. 16 is a flowchart of a third message transmission apparatus provided by an embodiment of the present disclosure.
FIG. 17 is a flowchart of a fourth message transmission apparatus provided by an embodiment of the present disclosure.
FIG. 18 is a flowchart of a fifth message transmission apparatus provided by an embodiment of the present disclosure.
FIG. 19 is a flowchart of a sixth message transmission apparatus provided by an embodiment of the present disclosure.

### DESCRIPTION OF EMBODIMENTS

In the present disclosure, "at least one" refers to one or more, and "multiple" refers to two or more than two. The term "and/or" describes the association relationship between associated objects, indicating that there can be three kinds of relations, for example, A and/or B can represent: there is A alone, there are both A and B, and there is B alone, where A, B may be singular or plural. The character "/" generally indicates that the associated objects are in an "or" relationship. The "at least one of the following (items)" or similar expressions indicate any combination of these items, including any combination of a single item or multiple items. For example, at least one of a, b or c, can represent: a, b, c, a-b, a-c, b-c or a-b-c, where a, b, c can be single or multiple.

It could be understood that steps or operations in embodiments of the present disclosure are only examples. The embodiments of the present disclosure may further perform other operations or variations of the operations. In addition, the steps may be performed in a different order than those presented in embodiments of the present disclosure, and not all steps in the embodiments of the present disclosure must to be performed.

The technical solutions in the embodiments of the present disclosure will be described as follows clearly and completely in conjunction with accompanying drawings in the embodiments of the present disclosure. Apparently, the described embodiments are merely a part, rather than all of the embodiments of the present disclosure. Based on the embodiments of the present disclosure, all other embodiments obtained by those of ordinary skill in the art without paying creative effort shall fall within the protection scope of the present disclosure.

The technical solutions provided by the embodiments of the present disclosure may be applicable to various systems and, in particular, to a 5G system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. The various systems all include a terminal and a network device, and further include a core network part, such as an evolved packet system (Evolved Packet System, EPS), a 5G system (5GS), etc.

In order to better understand the solutions, firstly, the problems in the prior art are briefly described below.

### 1. Existing network system architecture

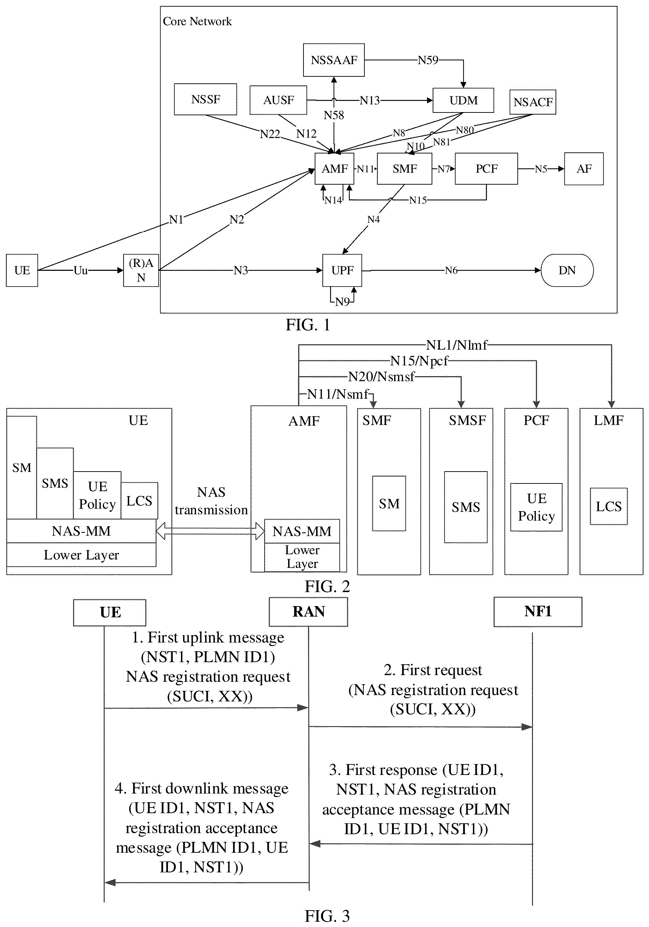

Referring to FIG. 1, the existing network system architecture includes a terminal UE, a (radio) access network (R)AN, and a core network (including multiple network element devices).

Among them, the network element devices in the core network include: a UPF (User Plane Function, User Plane Function), an AMF (Access and Mobility Management Function, Access and Mobility Management Function), a SMF (Session Management Function, Session Management Function), a PCF (Policy Control Function, Policy Control Function), an AF (Application Function, Application Function), a NSSF (Network Slice Selection Function, Network Slice Selection Function), an AUSF (Authentication Server Function, Authentication Server Function), a UDM (Unified Data Management, Unified Data Management), a NSACF (The Network Slice Admission Control Function, Network Slice Admission Control Function), a NSSAAF (Network Slice-Specific Authentication and Authorization Function, Network Slice-Specific Authentication and Authorization Function), and a DN (Data Network, Data Network). In addition, in FIG. 1, N1 to N15, as well as N22, N58, N59, N80, N81, and Uu are all corresponding communication interfaces.

In the existing network architecture shown in FIG. 1, interactions between the UE and the control plane network elements need through the AMF, resulting in low communication efficiency.

### 2. Existing NAS message transmission method

Referring to FIG. 2, NAS messagesinclude SM (Session Management, Session Management), SMS (Short Messaging Service, Short Messaging Service), UE Policy (terminal Policy), and LCS (Location Services, Location Services). NAS-MM is a NAS protocol layer for a MM (Mobility Management) function. Lower layer (Lower layer).

### 3. Technical problem.

As shown in FIG. 1 and FIG. 2, in the prior art, the AMF is used to transmit NAS messages to the corresponding NF (a core network element). After the RAN is service-based, the RAN can directly interact with each NF of the core network, and at that time, the NAS can be directly sent from the RAN to the corresponding network element without through the AMF. How the RAN transmits messages from the UE to the corresponding NF remains a problem to be solved.

To solve the above problem, an embodiment of the present disclosure provides a message transmission method and apparatus, and a storage medium. By storing first data, where the first data includes: a first network service type and a first target identifier corresponding to the first network type, where the first target identifier is an identifier, which is allocated by a first core network element for the terminal, oriented to the first network service type, where the first target identifier is carried when the terminal initiates a request corresponding to the first network type, the transmission efficiency of NAS messages is improved.

The following is a detailed description of contents of embodiments of the present disclosure, where the method and the apparatus are based on the same application concept. Since principles of the method and the apparatus to solve the problem are similar, reference can be made to each other for the implementations of the apparatus and the method, and repeated details will not be described.

Firstly, the present disclosure provides a message transmission method applied to a terminal, where the message transmission method includes: storing first data, where the first data includes: a first network service type (NST1) and a first target identifier (UE ID1) corresponding to the first network type, where the first target identifier is an identifier, which is allocated by a first core network element (NF1) for the terminal (UE), oriented to the first network service type, where the first target identifier is used to carry a first target identifier when the terminal initiates a request corresponding to the first network type.

In the embodiments of the present disclosure, the first network service type may be SM, SMS, UE Policy, LCS, and etc.

Further, before storing the first data, the method further includes: sending a first uplink message to a radio access network, where the first uplink message carries the first network service type and a first non-access stratum message, where the first network service type is used to indicate the radio access network to determine a first core network element corresponding to the first network service type, and the first non-access stratum message is used to indicate the first core network element to allocate the first target identifier to the terminal; and receiving a first downlink message, where the first downlink message carries the first data.

Further, after storing the first data, the method further includes: sending a second uplink message to the radio access network, where the second uplink message carries the first target identifier, the first network service type and a second non-access stratum message; where the second non-access stratum message carries the first target identifier, where the radio access network is used for transparent transmission of a non-access stratum message; where the second uplink message is used to indicate the radio access network to determine the first core network element according to the first target identifier and the first network service type, and send the second non-access stratum message to the first core network element, where the first target identifier is used for the first core network element to determine the terminal.

In an embodiment of the present disclosure, the RAN may determine the NF1 serving the UE in any one of the following modes.

### Mode 1, based on UE ID1 and NST1 information.

Where the RAN determines the type of core network element serving the UE based on the NST1, and then determines the NF1 serving the UE based on routing information of the first core network element carried in the UE ID1.

### Mode 2, based on UE context in the RAN.

The RAN stores the UE ID1 allocated by the NF1 and the corresponding NST1 in the UE context, and when the RAN receives a request from the UE again, it acquires the NF1 serving the UE from the UE context based on <UE ID1, NST1>.

Mode 3, the RAN sends a request to NRF/UDM/UDR based on the received <UE ID1, NST1>.

Where each NF writes the corresponding <UE ID, NST> and NF information (such as a NF identifier) to NRF (Network Repository Function, Network Repository Function)/UDM/UDR or other network elements when allocating UE ID. Upon receiving a UE request, the RAN acquires the NF1 serving the UE from NRF/UDM/UDR based on <UE ID, NST>.

In an embodiment of the present disclosure, the first target identifier is an identifier allocated by the network side for the UE, where the identifier carries routing information corresponding to the core network element, which allows the RAN to route UE messages to the core network element. In addition, a target identifier of the terminal and the corresponding network service type in the embodiments of the present disclosure may be combined to be configured as a same field. Furthermore, RRC messages in the embodiments of the present disclosure may not carry the target identifier of the terminal in some scenarios. Additionally, the PLMN ID of the present disclosure may be encapsulated by the RAN. That is, the downlink NAS message contains the UE ID and NST, the NAS message sent from the RAN to the UE includes the PLMN ID, and the UE can then determine and store <PLMN ID, UE ID, NST> based on the PLMN ID and the <UE ID, NST> in the NAS message.

Furthermore, the first non-access message carries a terminal identifier of the terminal, where the terminal identifier is used for the first core network element to determine the terminal.

Among them, the terminal identifier includes: a subscription concealed identifier (SUCI) and/or a permanent equipment identifier (PEI).

In an optional embodiment, the first uplink message further carries a first public land mobile network identifier, where the first public land mobile network identifier and the first network service type are used to indicate the radio access network to determine the first core network element.

Among them, the first data further includes a first public land mobile network identifier (PLMN ID1), where the first core network element belongs to the first public land mobile network.

Exemplarily, referring to FIG. 3, when there is no first target identifier on the UE side or the first target identifier is unavailable, the UE can register using SUCI (Subscription Concealed Identifier, Subscription Concealed Identifier), which specifically includes the following steps.
1. The UE sends the first uplink message to the RAN, where the first uplink message carries NST1, PLMN ID1 (a first public land mobile network identifier) and a NAS registration request. It can be understood that the first non-access stratum message in the present disclosure is the NAS registration request, and the first non-access stratum message carries SUCI. Additionally, XX represents other information.
2. The RAN sends the first request to the NF1, where the first request carries the NAS registration request.
3. The NF1 sends the first response to the RAN according to the first request, where the first response carries UE ID1, NST1 and a NAS registration acceptance message, where the NAS registration acceptance message is a NAS downlink message and carries the first data. The first data includes: PLMN ID1, UE ID1 and NST1.
4. The RAN sends the first downlink message to the UE, where the first downlink message carries the NAS registration acceptance message. Furthermore, the UE can store the first data.

In an embodiment of the present disclosure, referring to FIG. 3, if the UE ID contains PLMN ID1, the NAS messages in steps 3 and 4 may not carry PLMN ID1. Additionally, in step 3, the NF can skip sending PLMN ID1 to the RAN. If skipping, the RAN can still know PLMN ID1 based on the UE context. Further, the NF1 can obtain an SUPI (Subscription Permanent Identifier, Subscription Permanent Identifier) of the UE according to the SUCI of the UE, where the SUPI is obtained after decrypting SUCI. The present disclosure does not limit how to obtain the SUPI of the UE according to the SUCI.

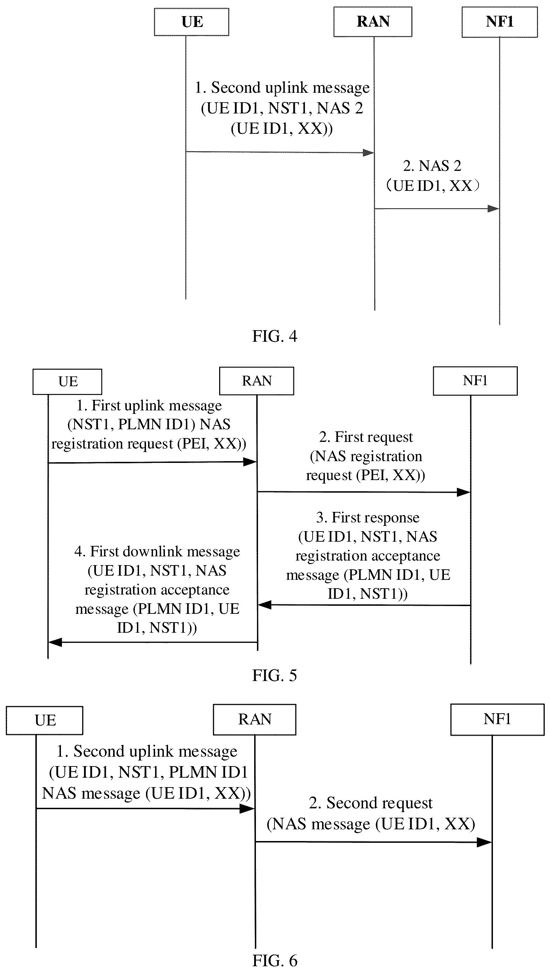

Exemplarily, referring to FIG. 4, the following steps are included.
1. The UE sends the second uplink message to the RAN, where the second uplink message carries a UE ID1, a NST1, and a second non-access stratum message (NAS 2), where the NAS 2 carries the UE ID1 and other messages (XX).
2. The RAN determines the NF1 according to the UE ID1 and the NST1, and then sends the NAS 2 to the NF1.

Among them, in FIG. 5, if there is no first target identifier or no valid first target identifier, nor a SUCI on the UE side, the UE needs to carry parameters that can identify the UE's identity (a terminal identifier) in the NAS message when sending the NAS message, such as a PEI. When initiating a network service request, the UE needs to carry the first network service type in the first uplink message to enable the RAN to discover and select the corresponding NF according to the first network service type. Other steps are the same as those in FIG. 4.

Referring to FIG. 5, when there is no first target identifier or no valid first target identifier, nor a SUCI on the UE side, specifically, the following steps are included.
1. The UE sends the first uplink message to the RAN, where the first uplink message carries a NST1, a PLMN ID1, and a NAS registration request. It can be understood that the first non-access stratum message in the present disclosure is the NAS registration request, and the first non-access stratum message carries a PEI (Permanent Equipment Identifier, Permanent Equipment Identifier).
2. The RAN sends a first request to the NF1, where the first request carries the NAS registration request.
3. The NF1 sends the first response to the RAN according to the first request, where the first response carries a UE ID1, the NST1, and a NAS registration acceptance message, where the NAS registration acceptance message is a NAS downlink message, which carries the first data, where the first data includes: the PLMN ID1, the UE ID1, and the NST1.
4. The RAN sends the first downlink message to the UE, where the first downlink message carries the NAS registration acceptance message. Further, the UE may include the first data.

In an embodiment of the present disclosure, the uplink message sent by the UE to the radio access network includes a RRC message and a NAS message.

In an embodiment of the present disclosure, when there is already a first target identifier corresponding to the first network service stored on the UE side, the UE can directly send a second uplink message to the RAN (such as a MO SMS (instant short message service) registration request, a service request triggered by the UE, etc.), referring to FIG. 6, the following steps are included.
1. The UE, according to the application requirements, defines and establishes the second uplink message to be sent according to the message structure of the corresponding service, and <UE ID1, NST1> is included in the outer RRC message (that is, it can be parsed by the RAN), where the NST1 refers to the service type requested by the UE, such as AM, SM, SMS, LCS, UE Policy, etc. The UE ID1 is the unique identifier allocated by a NF1 to the UE (that is, the first target identifier). The second uplink message further carries the NSA message (that is, the second non-access stratum message), and the second non-access stratum message carries the UE ID1.
2. The RAN node determines the NF serving the UE as the NF1 according to <UE ID, NST>, and sends the second request to the NF1, where the second request carries the second non-access stratum message.

Furthermore, in FIG. 6, in the registration process and the UE-triggered service request process, the second uplink message sent by the UE further needs to carry the corresponding PLMN ID, and other processes may not carry the PLMN ID. Additionally, the RAN can determine the PLMN for the service according to the UE context.

Furthermore, when the first target identifier corresponding to the first network service has already stored on the UE side, the following are included: receiving a third downlink message sent by a radio access network, where the third downlink message carries the first data; and determining a service type according to the first data and responding accordingly.

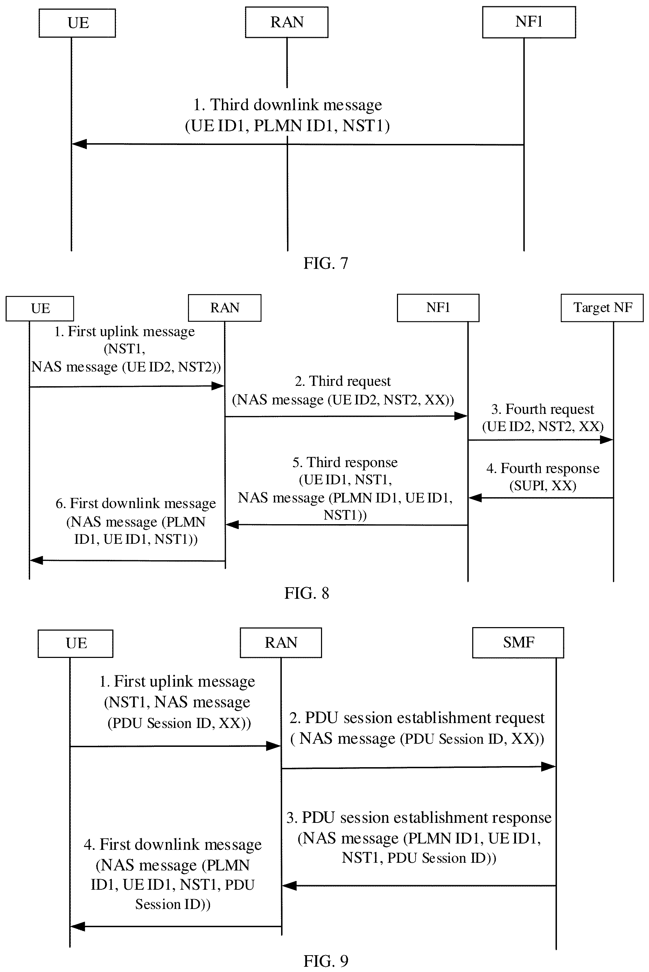

Referring to FIG. 7, the NF1 can directly send the third downlink message to the UE through the RAN, where the third downlink message carries the first data. The first data includes a PIMN ID1, a UE ID1 and a NST1. Specifically, the third downlink message sent by the NF1 to the UE carries the UE ID1 allocated by the NF1 for the UE and the NST1 of the NF1 service, and the UE can determine the network-triggered service type according to the first data (the PIMN ID1, the UE ID1 and the NST1) and make a corresponding response.

In an optional embodiment, when the terminal identifier corresponding to the network service type is not stored on the UE side, the first non-access stratum message carries the second network service type and/or the second target identifier corresponding to the second network service type; where the first non-access stratum message is used to indicate the first core network element to acquire terminal information from the corresponding target network element and allocate the first target identifier according to the terminal information, where the target network element stores the terminal information.

Exemplarily, referring to FIG. 8, the following steps are included.
1. When the UE initiates a network service request (that is, the first uplink message) to the network, while there is no first target identifier corresponding to the first network service type (NST1) stores on the UE side, the NAS message (that is, the first non-access stratum message) sent by the UE to the network can carry <the second target identifier (UE ID2) and the second network service type (NST2)>, where the UE ID2 is the corresponding UE ID allocated by the NST2 for the UE. When the NST1 is the network service type that the UE requires to access, such as SMS, and there is no target identifier corresponding to the SMS service on the UE side, the UE can carry the UE ID corresponding to an AM when initiating the request.
2. The RAN discovers and selects, according to the NST1 carried in the first uplink message, the NF1 corresponding to the NST1, and sends the third request of the UE to the NF1, where the third request carries the first non-access stratum message (UE ID2, NST2) and XX.
3. After receiving the first non-access stratum message, the NF1 sends, according to the UE ID2 and the NST2, a fourth request to a target network element (UDM (Unified Data Management Function) or an UDR (Unified Data Repository Function) or a NF2 (the core network element determined by the second target identifier and the second network service type)), where the fourth request carries a UE ID2 and a NST2 and is used to request terminal information (UE-related information, such as SUPI or PEI).
4. The target network element obtains the UE context based on the NF2 and the NST2, such as the SUPI of the UE, and sends a fourth response to the NF1 to return the UE information to the NF1.
5. After receiving the UE information, the NF1 allocates the corresponding UE ID1 for the UE, and then sends a third response to the RAN, where the third response carries the UE ID1, NST1, and the NAS message, where the NAS message carries the PLMN ID1, the UE ID1, and the NST1, and is sent to the RAN and to the UE through the NAS message.
6. The RAN sends the first downlink message to the UE, carrying the NAS message to enable the UE to receive and store < UE ID1, NST1>.

Furthermore, in FIG. 8, the first network service type (NST1) and the second network service type (NST2) can be the same. If they are the same type, NST2 can be omitted in the first non-access stratum message. If the NF only receives UE ID2, it is determined that the network service type corresponding to the UE ID2 is consistent with the first network service type.

Furthermore, based on FIG. 8, the first non-access stratum message further carries a second public land mobile network identifier; where the second public land mobile network identifier, the second network service type, and the second target identifier are used to indicate the first core network element to acquire terminal information from the target network element in the second public land mobile network and allocates the second target identifier for the terminal according to the terminal information.

Specifically, in an embodiment of the present disclosure, when the UE requests services from different PLMNs (such as in roaming scenarios), and the RAN can serve core networks of different PLMNs, during sending a service request, the UE needs to carry the network service type, and further needs to carry the access PLMN ID for accessing the PLMN.

Among them, the second public land mobile network is different from the first public land network, where the first core network element belongs to the first public land network, and the target network element belongs to the second public land mobile network.

Exemplarily, the following steps are included: when the UE sends the first uplink message through the RAN to the NF1, it needs to carry PLMN ID1 in the first non-access stratum message, where the PLMN ID1 is the identifier of the first public land network that the UE acquires to access. The RAN can determine the first public land network to be accessed according to the PLMN ID1, and discover and select the NF1 in the accessed first public land network for UE services according to the NST1, and send the first request to the NF1. Then, the NF1 acquires the terminal information of the UE from the UDM/UDR of the second public land network PLMN ID2. The NF1 allocates the UE ID1 for the UE, sends <PLMN ID1, UE ID1, NST1> to the RAN, and sends <PLMN ID1, UE ID1, NST1> to the UE through the NAS message. The UE receives and stores <PLMN ID1, UE ID1, NST1>.

For another example, the following steps are included.
1. When the UE acquires to access another PLMN (that is, an unregistered PLMN, the first public land mobile network), and there is no first target identifier corresponding to the first public land mobile network stores on the UE side, when the UE registers in the first public land mobile network, it can carry <PLMN ID1, NST1> in the first uplink message, and carry <PLMN ID2, UE ID2, NST2> in the NAS message (the first non-access stratum message), where the PLMN ID1 is the PLMN ID currently accessed by the UE, the PLMN ID2 is the PLMN ID previously registered by the UE, and the UE ID2 is the target identifier allocated by the NF2 corresponding to the NST2 for the UE in the PLMN ID2. After the RAN receives the first uplink message from the UE, it determines to access the PLMN according to the PLMN ID1, selects the corresponding NF1 in the first public land network according to the NST1, and then sends <PLMN ID2, UE ID2, NST2> along with the NAS message to the NF1.
2. After receiving the message, the NF1 of the first public land mobile network requests to acquire the terminal information of the UE from the allocated NF2 or UDM/UDR in the second public land network according to <PLMN ID2, UE ID2, NST2>. After receiving the terminal information of the UE, the NF1 allocates UE ID1 for the UE, and sends <PLMN ID1, UE ID1, NST1> to the RAN and sends it to the UE through the NAS message at the same time.
3. UE receives and stores <PLMN ID1, UE ID1, NST1>.

In an embodiment of the present disclosure, the target network element includes at least one of: a unified data management function, a unified data warehouse function, or a core network element determined by the second target identifier and the second network service type.

Furthermore, in an embodiment of the present disclosure, the first non-access stratum message can be a registration request message or an allocation request message. For the case of the allocation request message, the above embodiments can be referred to, and repeated details will not be described.

In an optional embodiment, the first non-access stratum message carries a protocol data unit session identifier, where the first core network element is a session management function, and the first data further includes the protocol data unit session identifier, the protocol data unit session identifier is used to identify the protocol data unit session that the terminal requests for the first network service type.

Referring to FIG. 9, when there are multiple first core network elements with the same first network service type serving the UE, such as multiple different SMFs (first core network elements) serving different sessions for the UE, the following steps are included.
1. UE sends a first uplink message to the RAN, where the first uplink message carries the NST1 and the first non-access stratum message.
2. RAN determines the SMF according to the NST1, and then initiates a PDU session establishment request to the SMF, where the PDU session establishment request carries the first non-access stratum message, where the first non-access stratum message carries the protocol data unit session identifier (PDU Session ID) and other messages XX.
3. After establishing the PDU Session, the corresponding SMF sends a PDU session establishment response to the RAN, where the PDU session establishment response carries the NAS message, which carries <PLMN ID1, UE ID1, NST1, PDU Session ID>.
4. The RAN sends the first downlink message to the UE, where the first downlink message carries the NAS message <PLMN ID1, UE ID1, NST1, PDU Session ID>, and the UE receives and stores <PLMN ID1, UE ID1, NST1, PDU Session ID>.

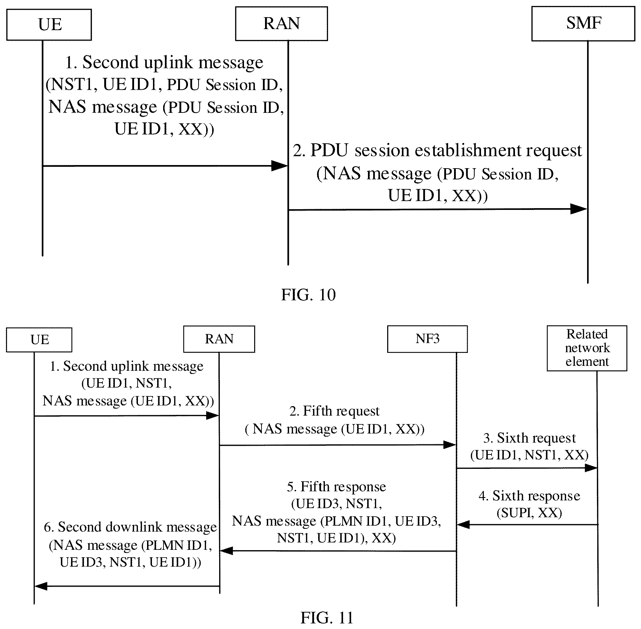

In FIG. 9, the PLMN ID1 in the downlink NAS message can be omitted. When the UE has another related request for the PDU Session, the <UE ID1, NST1> of the SMF to be requested can be located according to the PDU Session ID and UE ID1. As shown in FIG. 10:
1. The UE sends the second uplink message to the RAN, where the second uplink message carries <UE ID1, NST1, PDU Session ID> and the second non-access stratum message (that is, a NAS message), where the second non-access stratum message carries <UE ID1, PDU Session ID>.
2. RAN determines the SMF according to the UE ID1, NST1, and PDU Session ID, and sends a PDU session establishment request to the SMF, where the PDU session establishment request carries the second non-access stratum message.

In an optional embodiment, after sending the second uplink message to the radio access network, the following are further included: receiving a second downlink message sent by the radio access network, where the second downlink message carries a first public land mobile network identifier, a third target identifier, the first target identifier and the first network service type, where the third target identifier is allocated by the third core network element for processing the second non-access stratum message to the terminal for the first network service type; and updating the first target identifier in a historical storage with the third target identifier according to the first target identifier.

Exemplarily, referring to FIG. 11, the following steps are included.
1. The UE sends the second uplink message to the RAN, where the second uplink message carries the UE ID1, the NST1, and the second non-access stratum message (that is, the NAS message carried by the second uplink message in FIG. 11), and the second non-access stratum message carries the UE ID1.
2. After receiving the second uplink message from the UE, the RAN determines the NF1 serving the UE according to the UE ID1 and the NST1 in the RRC message. If the RAN finds that the NF1 is unable to serve the terminal, that is, it is no longer suitable for serving the UE, such as when the load of the NF1 is too high, the RAN is not in the service area of the NF1, or the RAN is too far from the NF1, etc., the RAN can re-select a service NF3 for the UE according to the NST1 and other parameters, and send a fifth request to the NF3, where the fifth request carries the second non-access stratum message.
3. The NF3 sends a sixth request to the relevant network element (UDM, UDR or NF1), where the sixth request carries a UE ID1 or (UE ID1 and NST1).
4. The relevant network element returns a sixth response to the NF3, where the sixth response carries the terminal information of the UE, such as the SUPI.
5. After receiving the terminal information from the UE, the NF3 allocates a third target identifier (UE ID3) for the UE and sends a fifth response to the RAN, where the fifth response carries <PLMN ID 1, NST1> and the NAS message, which carries the PLMN ID 1, the UE ID3, the NST1, and the UE ID1.
6. The RAN sends the second downlink message to the UE, where the second downlink message carries the NAS message <PLMN ID 1, UE ID3, NST1, UE ID1>, enabling the UE to receive the NAS message <PLMN ID 1, UE ID3, NST1, UE ID1> and update the stored <PLMN ID 1, UE ID1, NST1> to <PLMN ID 1, NST1, UE ID3> according to the <PLMN ID 1, NST1, UE ID3>.

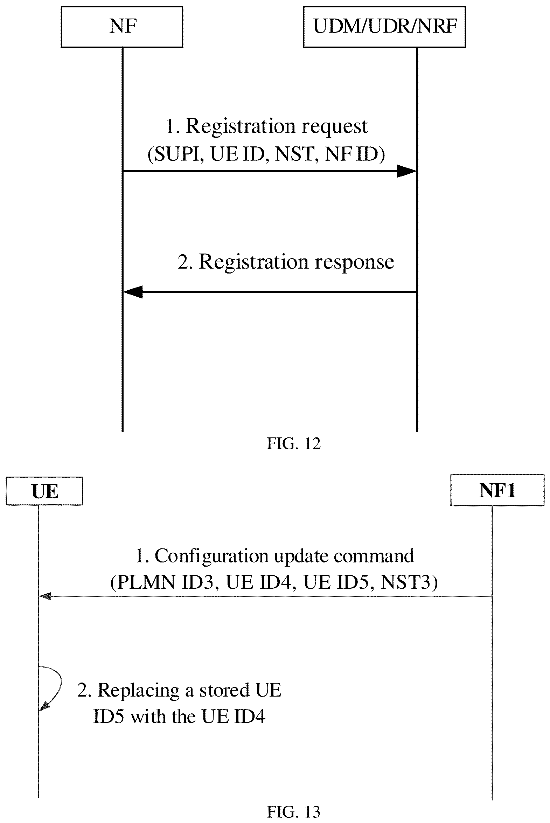

In an embodiment of the present disclosure, when allocating the target identifier (UE ID) to the UE, any core network element (NF) can send the corresponding <SUPI, UE ID, NST> and NF ID to the UDM/UDR/NRF (Network Repository Function, Network Repository Function), and the UDM/UDR/NRF stores the <SUPI, UE ID, NST, NF ID> relationship according to the received <SUPI, UE ID, NST> and NF ID. As shown in FIG. 12, the following steps are included.
1. The NF sends a registration request to the UDM/UDR/NRF, where the registration request carries the SUPI, the UE ID, the NST, and the NF ID,
2. After storing the SUPI, the UE ID, the NST and the NF ID, the UDM/UDR/NRF returns a registration response to the NF.

In an optional embodiment, the following are further included: receiving a configuration update command message sent by the first core network element, where the configuration update command message carries a third public land mobile network identifier, a fourth target identifier, a third network service type, and a fifth target identifier; determining the corresponding stored first data according to the third public land mobile network identifier, the third network service type and the fourth target identifier; and replacing a stored fifth target identifier with the fourth target identifier.

Among them, in addition to through the registration acceptance message and using the above method to allocate a new UE ID for the UE during the registration process, the NF1 can further re-allocate a UE ID to the UE at any time through the UE configuration update process, such as an initial registration process, a mobility registration update process, a periodic registration process and a service request process, etc. Exemplarily, referring to FIG. 13, the following steps are included.
1. The UE receives the configuration update command message sent by the first core network element, where the configuration update command message carries a PLMN ID3 (a third public land mobile network identifier), a UE ID4 (a fourth target identifier), a UE ID5 (a fifth target identifier) and a NST3 (a third network service type).
2. The UE determines its stored <PLMN ID3, UE ID4, NST3> according to <PLMN ID3, UE ID4, NST3>, and updates it to <PLMN ID3, UE ID5, NST3>. If a USIM (Universal Subscriber Identity Module) stores the corresponding UE ID4, then the UE ID5 is used to update the UE ID4 in the USIM. When the NF1 receives the UE confirmation after the configuration update completion message, it can be considered as the old UE ID (i.e., the UE ID4) being invalid.

In an optional embodiment, the first target identifier has a validity period.

The validity period is a valid time during which the NF1 sends the UE ID1 to the UE. Exemplarily, the NF1 can start a timer when allocating the UE ID1 for the UE, and send the valid time of the timer to the UE along with the UE ID1 when sending the UE ID1 to the UE. After the UE receives the UE ID1, it also starts the timer.

After the timer expires, that is, after the validity period has passed, the UE ID1 becomes invalid, and the NF1 will re-allocate a new UE ID for the UE. If the NF1 does not allocate a new UE ID to the UE but the UE still wants to continue using the network service, it can execute the aforementioned method of requesting the target identifier from the NF1 to enable the NF1 to allocate a valid UE ID for it. During the re-allocation, the UE can carry the just-invalidated UE ID in the NAS message to initiate a request to the network.

When the timer does not expire, the NF1 can also immediately configure the UE with a new UE ID using the aforementioned reconfiguration method. After receiving the new UE ID, the old UE ID becomes invalid, and the UE restarts the timer and updates the valid time of the UE ID according to the received valid time.

Furthermore, if the NF1 allocates the UE ID1 to the UE without sending a valid time value of the UE ID1 at the same time, the UE can consider the UE ID1 to be always valid until the UE receives the new UE ID allocated by the NF.

In an optional embodiment, the following are further included: deleting the first target identifier under at least one of the following conditions:
receiving a target identifier for replacing the first target identifier;
the first target identifier exceeds a set validity period;
registration times of using the first target identifier exceed a preset number of times; or
an initial registration of using the first target identifier is rejected by a corresponding core network element.

Exemplarily, after the UE receives the new UE ID, it considers the old UE ID as invalid and deletes the old UE ID. When the validity period of the UE ID expires, the UE deletes the UE ID. If the times of registration attempts of the UE are equal to 5, the UE should delete the UE ID. If the initial registration request initiated by the UE is not correctly received by the network, the UE will receive a rejection registration message from the network. If the rejection registration message includes one of the reasons such as "illegal UE, 5GS service is not allowed, PLMN is not allowed, tracking is not allowed, roaming is not allowed in this tracking area, N1 mode is not allowed, no available network slice, network cannot export a UE identifier, non-3GPP access to the 5G CN is not allowed", the UE should delete all UE IDs stored locally.

Furthermore, the first data is stored in a universal subscriber identity module and/or a non-volatile memory. During the validity period of the first target identifier, the terminal performs the operation of turning on and then turning off, and the first data is retained and valid.

In an embodiment of the present disclosure, the <PLMN ID, UE ID, NST> stored in the UE is unique, independent, and will not be overwritten by other relationships. Where <PLMN ID, UE ID, NST> can be preferentially stored in the USIM (Universal Subscriber Identity Module), if not, it is stored in the non-volatile memory of the UE. If it is stored in the USIM, <PLMN ID, UE ID, NST> can be migrated with the USIM card, and if the USIM card is installed in another UE, the <PLMN ID, UE ID, NST> data in the USIM can also be reused. As in the UE ID validity period described above, <PLMN ID, UE ID, NST> can also be considered valid during the UE ID validity period and becomes invalid together after the UE ID validity period. In the valid period of the UE ID, the UE performs the operation of turning on and then turning off, and the <PLMN ID, UE ID, NST> is retained and valid.

In an optional embodiment, if the NF1 initiates a paging to the terminal, at this time, the corresponding NF1 has two target identifiers (a new target identifier and an old target identifier), that is, the NF is sending the new target identifier to the UE, but has not received a response from the UE. At this time, it is considered that both target identifiers are valid. When the NF initiates paging to the UE, it can first use the old target identifier for paging, and if the paging initiated by using the old target identifier does not receive the response from the UE, the NF can use the new target identifier again to re-paging the UE.

In an embodiment of the present disclosure, through making the terminal carry the corresponding network service type when sending the request, after the RAN is service-based, the RAN can determine the NF to serve the UE according to the network service type sent by the UE, thereby achieving on-demand transmission of the NAS message and reducing the nesting of the NAS message.

In addition, an embodiment of the present disclosure further provides a message transmission method, applied to a radio access network, where the message transmission method includes: receiving a second uplink message sent by a terminal, where the second uplink message carries a first target identifier, a first network service type and a second non-access stratum message, where the second non-access stratum message carries the first target identifier, the radio access network is used for transparent transmission of a non-access stratum message, where the first target identifier is allocated by a first core network element for the terminal; determining the first core network element according to the first target identifier and the first network service type; and sending the second non-access stratum message to the first core network element, where the first target identifier is used for the first core network element to determine the terminal.

In an embodiment, after determining the first core network element according to the first target identifier and the first network service type, the following are further included: determining a third core network element when the first core network element is unable to provide services for the terminal; sending the second non-access stratum message to the third core network element, where the second non-access stratum message is used to indicate the third core network element to acquire terminal information from a relevant network element and allocate a third target identifier to the terminal according to the terminal information; and receiving the third target identifier sent by the third core network element, and sending the second downlink message to the terminal, where the second downlink message carries a first public land mobile network identifier, the third target identifier, the first target identifier, and the first network service type, where the second downlink message is used to indicate the terminal to update the first target identifier in a historical storage with the third target identifier.

In an embodiment, after sending the first downlink message to the terminal and before receiving the second uplink message from the terminal, the following are further included: receiving the first uplink message sent by the terminal, where the first uplink message carries the first network service type and the first non-access stratum message, where the first network service type is used to indicate the radio access network to determine a first core network element corresponding to the first network service type, and the first non-access stratum message is used to indicate the first core network element to allocate the first target identifier to the terminal;
sending the first downlink message to the terminal to enable the terminal to store the first data, where the first downlink message carries the first data, the first network service type and the first target identifier are corresponding to the first network type.

In an embodiment, the first non-access stratum message carries a terminal identifier of the terminal, and the terminal identifier is used for the first core network element to determine the terminal.

In an embodiment, the terminal identifier includes: a user hidden identifier and/or a permanent device identifier.

In an embodiment, the first uplink message further carries a first public land mobile network identifier, where the determining the first core network element corresponding to the first network service type according to the first network service type includes: determining the first core network element based on the first public land mobile network identifier and the first network service type.

In an embodiment, the first non-access stratum message carries a second network service type and/or a second target identifier corresponding to the second network service type; where the first non-access stratum message is used to indicate the first core network element to acquire the terminal identifier from the corresponding target network element and allocate the first target identifier according to the terminal identifier, and the target network element stores the terminal identifier.

In an embodiment, the first non-access stratum message further carries a second public land mobile network identifier; where the second public land mobile network identifier, the second network service type and the second target identifier are used to indicate the first core network element to acquire the terminal identifier from the target network element in the second public land mobile network and allocate the first target identifier for the UE according to the terminal identifier.

In an embodiment, the target network element includes at least one of: a unified data management function, a unified data warehouse function, or a core network element determined by the second target identifier and the second network service type.

In an embodiment, the first non-access stratum message carries a protocol data unit session identifier, where the first core network element is a session management function, and the first data further includes the protocol data unit session identifier, and the protocol data unit session identifier is used to identify a protocol data unit session that the terminal requests for the first network service type.

In an embodiment, the following are further included: sending a third downlink message to the terminal, where the third downlink message carries the first data, and the first data is used to indicate the terminal to determine a service type according to the first data and respond accordingly.

In an embodiment, the first target identifier has a validity period.

In an embodiment of the present disclosure, the execution process of the radio access network can refer to the aforementioned terminal-side embodiments, and repeated details will not be described.

In an embodiment of the present disclosure, another message transmission method is provided, which is applied to a first core network element. The message transmission method includes: receiving a first non-access stratum message sent by a radio access network, where the first non-access stratum message is sent after the radio access network receives a first uplink message from a terminal, where the first uplink message carries a first network service type and a first non-access stratum message, and the first network service type is used to indicate the radio access network to determine a first core network element corresponding to the first network service type; allocating a first target identifier for the terminal according to the first non-access stratum message; and sending a first downlink message to the terminal through the radio access network, where the first downlink message carries a target access stratum message, where the target access stratum message carries first data, where the first data includes: a first target identifier and a first network service type, where the first downlink message is used to indicate the terminal to store the first data.

In an embodiment, a third downlink message sending to the terminal, where the third downlink message carries the first data, and the first data is used to indicate the terminal to determine a service type and respond accordingly.

In an embodiment, the first data further includes a first public land mobile network identifier, and the first core network element belongs to the first public land mobile network.

In an embodiment, after sending the first downlink message to the terminal through the radio access network, the method further includes: receiving a second non-access stratum message sent by the radio access network, where the second non-access stratum message is sent after the radio access network receives a second uplink message from the terminal, where the second uplink message carries the first target identifier, the first network service type and the second non-access stratum message, where the second non-access stratum message carries the first target identifier, and the radio access network is used for transparent transmission of a non-access stratum message; and determining the terminal according to the first target identifier.

In an embodiment, the first non-access stratum message carries a terminal identifier of the terminal, and the first core network element is used to determine the terminal based on the terminal identifier.

In an embodiment, the terminal identifier includes: a user hidden identifier and/or a permanent device identifier.

In an embodiment, the first uplink message further carries a first public land mobile network identifier, where the first public land mobile network identifier and the first network service type are used to indicate the radio access network to determine the first core network element.

In an embodiment, the first non-access stratum message carries a second network service type and/or a second target identifier corresponding to the second network service type. The allocating the first target identifier for the terminal according to the first non-access stratum message includes: acquiring the terminal identifier from the corresponding target network element according to the first non-access stratum message; and allocating the first target identifier according to the terminal identifier, where the target network element stores the terminal identifier.

In an embodiment, the first non-access stratum message carries the second public land mobile network identifier. The acquiring the terminal identifier from the corresponding target network element according to the first non-access stratum message includes: acquiring the terminal identifier from the target network element according to the second public land mobile network identifier, the second network service type, and the second target identifier; and allocating the first target identifier to the terminal according to the terminal identifier, where the target network element belongs to the second public land mobile network.

In an embodiment, the target network element includes at least one of: a unified data management function, a unified data warehouse function, or a core network element determined by the second target identifier and the second network service type.

In an embodiment, the first non-access stratum message carries a protocol data unit session identifier, where the first core network element is a session management function, and the first data further includes the protocol data unit session identifier, and the protocol data unit session identifier is used to identify a protocol data unit session that the terminal requests for the first network service type.

In an embodiment, the method further includes: sending a configuration update command message to the terminal, where the configuration update command message carries a third public land mobile network identifier, a fourth target identifier, a third network service type, and a fifth target identifier, where the configuration update command message is used to indicate the terminal to determine the corresponding stored first data according to the third public land mobile network identifier, the third network service type, and the fourth target identifier; and replacing a stored fifth target identifier with the fourth target identifier.

In an embodiment, the first target identifier has a validity period.

In an embodiment, the method further includes: when there are multiple target identifiers for the first network service type for the terminal, using any one of the multiple target identifiers to send a paging to the terminal.

In an embodiment of the present disclosure, the execution process of the first core network element can refer to the aforementioned terminal-side embodiments, and repeated details will not be described.

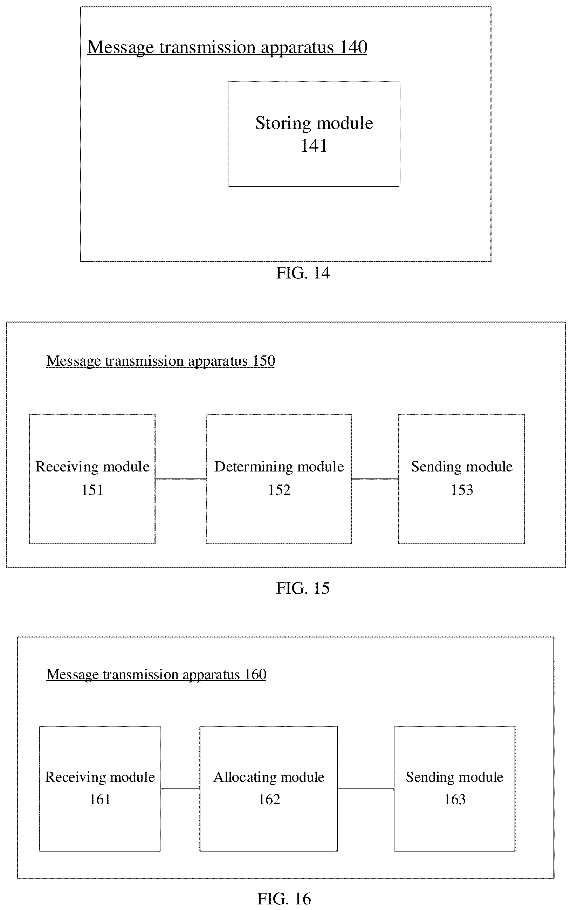

Furthermore, referring to FIG. 14, an embodiment of the present disclosure provides a message transmission apparatus 140, which is applied to the terminal. The message transmission apparatus includes:
a storage module 141, configured to store first data, where the first data includes: a first network service type and a first target identifier corresponding to the first network type, where the first target identifier is an identifier, which is allocated by a first core network element for the terminal, oriented to the first network service type, where the first target identifier is carried when the terminal initiates a request corresponding to the first network type.

In an optional embodiment, the first data further includes a first public land mobile network identifier, where the first core network element belongs to the first public land mobile network.

In an optional embodiment, the apparatus further includes:
a sending module (not shown), configured to, before storing the first data, send a first uplink message to a radio access network, where the first uplink message carries the first network service type and a first non-access stratum message, where the first network service type is used to indicate the radio access network to determine a first core network element corresponding to the first network service type, and the first non-access stratum message is used to indicate the first core network element to allocate the first target identifier to the terminal; and
a receiving module (not shown), configured to receive a first downlink message, where the first downlink message carries the first data.

In an optional embodiment, the sending module is further configured to: after storing the first data, send a second uplink message to a radio access network, where the second uplink message carries the first target identifier, the first network service type and a second non-access stratum message, where the second non-access stratum message carries the first target identifier, and the radio access network is used for transparent transmission of a non-access stratum message; where the second uplink message is used to indicate the radio access network to determine the first core network element according to the first target identifier and the first network service type, and send the second non-access stratum message to the first core network element, where the first target identifier is used for the first core network element to determine the terminal.

In an optional embodiment, the first non-access stratum message carries a terminal identifier of the terminal, and the terminal identifier is used for the first core network element to determine the terminal.

In an optional embodiment, the terminal identifier includes: a user hidden identifier and/or a permanent device identifier.

In an optional embodiment, the first uplink message further carries a first public land mobile network identifier; where the first public land mobile network identifier and the first network service type are used to indicate the radio access network to determine the first core network element.

In an optional embodiment, the first non-access stratum message carries a second network service type and/or a second target identifier corresponding to the second network service type; where the first non-access stratum message is used to indicate the first core network element to acquire terminal information from a corresponding target network element and allocate the first target identifier according to the terminal information, and the target network element stores the terminal information.

In an optional embodiment, the first non-access stratum message further carries a second public land mobile network identifier; where the second public land mobile network identifier, the second network service type and the second target identifier are used to indicate the first core network element to acquire terminal information from a target network element in the second public land mobile network and allocate the first target identifier for the terminal according to the terminal information.

In an optional embodiment, the target network element includes at least one of: a unified data management function, a unified data warehouse function, or a core network element determined by the second target identifier and the second network service type.

In an optional embodiment, the receiving module is further configured to, after sending the second uplink message to the radio access network, receive a second downlink message sent by the radio access network, where the second downlink message carries a first public land mobile network identifier, a third target identifier, the first target identifier and the first network service type, where the third target identifier is allocated by the third core network element for processing the second non-access stratum message to the terminal for the first network service type; and the apparatus further includes an updating module, configured to update the first target identifier in a historical storage with the third target identifier according to the first target identifier.

In an optional embodiment, the first non-access stratum message carries a protocol data unit session identifier, where the first core network element is a session management function, and the first data further includes the protocol data unit session identifier, and the protocol data unit session identifier is used to identify a protocol data unit session that the terminal requests for the first network service type.

In an optional embodiment, the receiving module is further configured to receive a third downlink message sent by a radio access network, where the third downlink message carries the first data; and the apparatus further includes a responding module, configured to determine a service type according to the first data and respond accordingly.

In an optional embodiment, the receiving module is further configured to: receive a configuration update command message sent by the first core network element, where the configuration update command message carries a third public land mobile network identifier, a fourth target identifier, a third network service type, and a fifth target identifier; the apparatus further includes a determining module, configured to determine the corresponding stored first data according to the third public land mobile network identifier, the third network service type and the fourth target identifier; and the apparatus further includes a replacing module, configured to replace a stored fifth target identifier with the fourth target identifier.

In an optional embodiment, the first target identifier has a validity period.

In an optional embodiment, the apparatus further includes a deleting module (not shown): configured to delete the first target identifier under at least one of the following conditions:
receiving a target identifier for replacing the first target identifier;
the first target identifier exceeds a set validity period;
registration times of using the first target identifier exceed a preset number of times; or
an initial registration of using the first target identifier is rejected by a corresponding core network element.

In an optional embodiment, the apparatus further includes a storing module (not shown): configured to store the first data in a universal subscriber identity module and/or a non-volatile memory, where during the validity period of the first target identifier, the terminal performs the operation of turning on and then turning off the power, and the first data is retained and valid.

Furthermore, referring to FIG. 15, the present disclosure further provides a message transmission apparatus 150, applied to a radio access network, where the message transmission apparatus 150 includes:
a receiving module 151, configured to receive a second uplink message sent by a terminal, where the second uplink message carries a first target identifier, a first network service type and a second non-access stratum message, where the second non-access stratum message carries the first target identifier, where the radio access network is used for transparent transmission of a non-access stratum message, and the first target identifier is allocated by a first core network element for the terminal;
a determining module 152, configured to determine the first core network element according to the first target identifier and the first network service type;
a sending module 153, configured to send the second non-access stratum message to the first core network element, where the first target identifier is used for the first core network element to determine the terminal.

In an optional embodiment, the determining module is further configured to, after determining the first core network element according to the first target identifier and the first network service type, determine a third core network element when the first core network element is unable to provide services for the terminal;
the sending module is further configured to send the second non-access stratum message to the third core network element, where the second non-access stratum message is used to indicate the third core network element to acquire terminal information from a relevant network element and allocate a third target identifier to the terminal according to the terminal information;
the receiving module is further configured to receive the third target identifier sent by the third core network element, and sending the second downlink message to the terminal, where the second downlink message carries a first public land mobile network identifier, the third target identifier, the first target identifier, and the first network service type, where the second downlink message is used to indicate the terminal to update the first target identifier in a historical storage with the third target identifier.

Referring to FIG. 16, the present disclosure further provides a message transmission apparatus 160, applied to a first core network element, where the message transmission apparatus 160 includes:
a receiving module 161, configured to receive a first non-access stratum message sent by a radio access network, where the first non-access stratum message is sent after the radio access network receives a first uplink message from a terminal, where the first uplink message carries a first network service type and a first non-access stratum message, and the first network service type is used to indicate the radio access network to determine a first core network element corresponding to the first network service type;
an allocating module 162, configured to allocate a first target identifier for the terminal according to the first non-access stratum message;
a sending module 163, configured to send a first downlink message to the terminal through the radio access network, where the first downlink message carries a target access stratum message, where the target access stratum message carries first data, where the first data includes: a first target identifier and a first network service type, where the first downlink message is used to indicate the terminal to store the first data.

In an optional embodiment, the sending module is further configured to send a third downlink message to the terminal, where the third downlink message carries the first data, and the first data is used to indicate the terminal to determine a service type and respond accordingly.

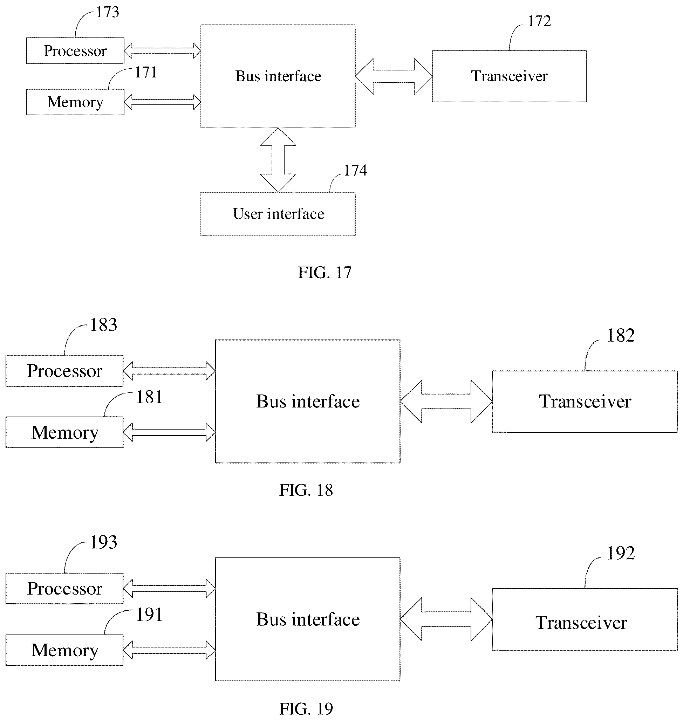

Referring to FIG. 17, the present disclosure further provides a message transmission apparatus, applied to a terminal, where the message transmission apparatus includes a memory 171, a transceiver 172, and a processor 173;
where the memory 171 is configured to store a computer program;
the transceiver 172 is configured to send and receive data under a control of the processor 173;
the processor 173 is configured to read the computer program in the memory 171 and perform following operations:
   storing first data, where the first data includes: a first network service type and a first target identifier corresponding to the first network type, where the first target identifier is an identifier, which is allocated by a first core network element for the terminal, oriented to the first network service type, where the first target identifier is carried when the terminal initiates a request corresponding to the first network type.

Among them, in FIG. 17, a bus architecture may include any number of interconnected buses and bridges, specifically, various circuits of one or more processors represented by the processor 173 and the memory represented by the memory 171 are linked together. The bus architecture can also link together various other circuits such as peripherals, voltage regulators, and power management circuits, which are all well known in the art and therefore no further description will be given herein. The bus interface provides an interface. The transceiver 172 may be a plurality of elements, i.e., including a transmitter and a receiver, providing a unit for communicating with various other apparatuses over transmission media, where the transmission media include the transmission media include wireless channels, wired channels, optical cables, and other transmission media. Optionally, a measurement processing apparatus may further include a user interface 174. For different user devices, the user interface 174 can also be an interface capable of being externally or internally connected to the required devices. The connected devices include, but are not limited to, a keypad, a display, a speaker, a microphone, a joystick, etc.

The processor 173 is responsible for managing the bus architecture and general processing, and the memory 171 can store data used by the processor 173 when performing operations.

Optionally, the processor 173 may be a central processing unit (central processing unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor 173 can also adopt a multi-core architecture.

The processor 173, by invoking the computer program stored in the memory 171, is used to execute any of the methods related to the terminal provided by the embodiments of the present disclosure in accordance with the obtained executable instructions. The processor and the memory can also be physically arranged separately.

Referring to FIG. 18, a message transmission apparatus applied to a radio access network is provided, where the message transmission apparatus includes a memory 181, a transceiver 182, and a processor 183;
where the memory 181 is configured to store a computer program;
the transceiver 182 is configured to send and receive data under a control of the processor 183;
the processor 183 is configured to read the computer program in the memory 181 and perform following operations:
   receiving a second uplink message sent by a terminal, where the second uplink message carries a first target identifier, a first network service type and a second non-access stratum message, where the second non-access stratum message carries the first target identifier, the radio access network is used for transparent transmission of a non-access stratum message, and the first target identifier is allocated by a first core network element for the terminal;
   determining the first core network element according to the first target identifier and the first network service type;
   sending the second non-access stratum message to the first core network element, where the first target identifier is used for the first core network element to determine the terminal.

Among them, in FIG. 18, a bus architecture may include any number of interconnected buses and bridges, specifically, various circuits of one or more processors represented by the processor 183 and the memory represented by the memory 181 are linked together. The bus architecture can also link together various other circuits such as peripherals, voltage regulators, and power management circuits, which are all well known in the art and therefore no further description will be given herein. The bus interface provides an interface. The transceiver 172 may be a plurality of elements, i.e., including a transmitter and a receiver, providing a unit for communicating with various other apparatuses over transmission media, where the transmission media include wireless channels, wired channels, optical cables, and other transmission media. The processor 173 is responsible for managing the bus architecture and general processing, and the memory 171 can store data used by the processor 173 when performing operations.

The processor 183 may be a CPU, an ASIC, a FPGA or a CPLD. The processor can also adopt a multi-core architecture.

The processor 183, by invoking the computer program stored in the memory 181, is used to execute any of the methods related to the radio access network provided by the embodiments of the present disclosure in accordance with the obtained executable instructions. The processor and the memory can also be physically arranged separately.

Referring to FIG. 19, a message transmission apparatus applied to a first core network element is provided, where the message transmission apparatus includes a memory 191, a transceiver 192, and a processor 193;
where the memory 191 is configured to store a computer program;
the transceiver 192 is configured to send and receive data under a control of the processor 193;
the processor 193 is configured to read the computer program in the memory 191 and perform following operations:
   receiving a first non-access stratum message sent by a radio access network, where the first non-access stratum message is sent after the radio access network receives a first uplink message from a terminal, where the first uplink message carries a first network service type and a first non-access stratum message, and the first network service type is used to indicate the radio access network to determine a first core network element corresponding to the first network service type;
   allocating a first target identifier for the terminal according to the first non-access stratum message;
   sending a first downlink message to the terminal through the radio access network, where the first downlink message carries a target access stratum message, where the target access stratum message carries first data, where the first data includes: a first target identifier and a first network service type, where the first downlink message is used to indicate the terminal to store the first data.

Among them, in FIG. 19, a bus architecture may include any number of interconnected buses and bridges, specifically, various circuits of one or more processors represented by the processor 193 and the memory represented by the memory 191 are linked together. The bus architecture can also link together various other circuits such as peripherals, voltage regulators, and power management circuits, which are all well known in the art and therefore no further description will be given herein. The bus interface provides an interface. The transceiver 192 may be a plurality of elements, i.e., including a transmitter and a receiver, providing a unit for communicating with various other apparatuses over transmission media, where the transmission media include wireless channels, wired channels, optical cables, and other transmission media. The processor 193 is responsible for managing the bus architecture and general processing, and the memory 191 can store data used by the processor 193 when performing operations.

The processor 193 may be a CPU, an ASIC, a FPGA or a CPLD. The processor can also adopt a multi-core architecture.

The processor 193, by invoking the computer program stored in the memory 191, is used to execute any of the methods related to the first core network element provided by the embodiments of the present disclosure in accordance with the obtained executable instructions. The processor and the memory can also be physically arranged separately.

It should be noted here that the aforementioned apparatuses provided by the disclosure can achieve all the method steps implemented in the above-mentioned method embodiments, and can achieve the same technical effects. Therefore, the same parts and beneficial effects in the embodiments that are the same as those in the method embodiments will not be specifically described here.

It should be noted that the division of units in the embodiments of the present disclosure is as an example and is merely a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or in the form of software functional units.

When the integrated unit is implemented in the form of a software functional unit and sold or used as an independent product, the integrated unit may be stored in a processor readable storage medium. Based on such an understanding, the technical solutions of the present disclosure essentially or the part that contributes to the prior art or all or a part of the technical solutions may be implemented in the form of a software product. The computer software product is stored in a storage medium and includes several instructions for instructing a computer device (which may be a personal computer, a server, a network device, or the like) or a processor (processor) to perform all or some steps of the methods described in the embodiments of the present disclosure. The foregoing storage medium includes any medium that can store a program code, such as a USB flash drive, a removable hard disk, a read-only memory (Read-Only Memory, ROM), a random access memory (Random Access Memory, RAM), a magnetic disk, or an optical disk, etc.

An embodiment of the present disclosure provides a processor-readable storage medium. The processor-readable storage medium stores a computer program, and the computer program is used to cause the processor to execute any method related to the terminal provided by the embodiments of the present disclosure, which enables the processor to implement all the method steps implemented by the terminal in the above method embodiments, and can achieve the same technical effects. Therefore, the same parts and beneficial effects in the embodiments that are the same as those in the method embodiments will not be specifically described here.

The processor-readable storage medium may be any available medium or data storage device that the processor can access, including but not limited to a magnetic memory (such as a floppy disk, a hard disk, a tape, a magneto-optical disk (MO), etc.), an optical memory (such as a CD, a DVD, a BD, a HVD, etc.), and a semiconductor memory (such as a ROM, an EPROM, an EEPROM, a non-volatile memory (NAND FLASH), a solid state drive (SSD)), etc.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied in one or more computer-usable storage media (including, but not limited to, a magnetic disk memory, an optical memory, and the like) having a computer-usable program code embodied therein.

The present disclosure is described with reference to flow charts and/or block diagrams of the methods, the apparatus, and the computer program products according to the embodiments of the present disclosure. It will be understood that each process and/or block in the flow charts and/or block diagrams, and combinations of processes and/or blocks in the flow charts and/or block diagrams, can be implemented by computer-executable instructions. These computer-executable instructions may be provided to a processor of a general-purpose computer, a special-purpose computer, an embedded processor, or other programmable data processing device to produce a machine, such that the instructions executed by the processor of the computer or other programmable data processing device produce means for implementing the functions specified in a process or multiple processes in the flow chart and/or in a block or multiple blocks in the block diagram.

These processor-executable instructions may also be stored in a processor-readable memory that causes a computer or other programmable data processing device to operate in a particular manner, such that instructions stored in the processor-readable memory generates a manufactured product including an instruction means. The instruction means implements the function specified in one process or multiple processes in the flow chart and/or one block or multiple blocks in the block diagram.

These processor-executable instructions may also be loaded into a computer or other programmable data processing devices, causing a series of operational steps to be performed in the computer or other programmable devices to produce computer-implemented processing, thereby causing the instructions that are executed in the computer or other programmable devices to provide steps for implementing the functions specified in a process or multiple processes of the flow charts and/or a block or multiple blocks of the block diagrams.

Obviously, those skilled in the art can make various changes and modifications to the present disclosure without departing from the spirit and scope of the present disclosure. In this way, if these changes and modifications of the present disclosure fall within the scope of the claims and equivalent technologies thereof of the present disclosure, the present disclosure is also intended to include these changes and modifications.

## Claims

1. A message transmission method, **characterized in that**, applied to a terminal, wherein the message transmission method;
storing first data, wherein the first data comprises: a first network service type and a first target identifier corresponding to the first network type, wherein the first target identifier is an identifier, which is allocated by a first core network element for the terminal, oriented to the first network service type, wherein the first target identifier is carried when the terminal initiates a request corresponding to the first network type.

2. The message transmission method according to claim 1, wherein the first data further comprises a first public land mobile network identifier, and the first core network element belongs to the first public land mobile network.

3. The message transmission method according to claim 1 or 2, before storing the first data, further comprising:
sending a first uplink message to a radio access network, wherein the first uplink message carries the first network service type and a first non-access stratum message, wherein the first network service type is used to indicate the radio access network to determine a first core network element corresponding to the first network service type, and the first non-access stratum message is used to indicate the first core network element to allocate the first target identifier to the terminal;
receiving a first downlink message, wherein the first downlink message carries the first data.

4. The message transmission method according to claim 1 or 2, after storing the first data, further comprising:
sending a second uplink message to a radio access network, wherein the second uplink message carries the first target identifier, the first network service type and a second non-access stratum message, wherein the second non-access stratum message carries the first target identifier, and the radio access network is used for transparent transmission of a non-access stratum message;
wherein the second uplink message is used to indicate the radio access network to determine the first core network element according to the first target identifier and the first network service type, and send the second non-access stratum message to the first core network element, wherein the first target identifier is used for the first core network element to determine the terminal.

5. The message transmission method according to claim 3, wherein the first non-access stratum message carries a terminal identifier of the terminal, and the terminal identifier is used for the first core network element to determine the terminal.

6. The message transmission method according to claim 5, wherein the terminal identifier comprises: a user hidden identifier and/or a permanent device identifier.

7. The message transmission method according to claim 3, wherein the first uplink message further carries a first public land mobile network identifier;
the first public land mobile network identifier and the first network service type are used to indicate the radio access network to determine the first core network element.

8. The message transmission method according to claim 3, wherein the first non-access stratum message carries a second network service type and/or a second target identifier corresponding to the second network service type;
wherein the first non-access stratum message is used to indicate the first core network element to acquire terminal information from a corresponding target network element and allocate a first target identifier according to the terminal information, and the target network element stores the terminal information.

9. The message transmission method according to claim 8, wherein the first non-access stratum message further carries a second public land mobile network identifier;
wherein the second public land mobile network identifier, a second network service type and the second target identifier are used to indicate a first core network element to acquire terminal information from a target network element in the second public land mobile network and allocate the first target identifier for the terminal according to the terminal information.

10. The message transmission method according to claim 9, wherein the target network element comprises at least one of: a unified data management function, a unified data warehouse function, or a core network element determined by the second target identifier and the second network service type.

11. The message transmission method according to claim 4, after sending the second uplink message to the radio access network, further comprising:
receiving a second downlink message sent by the radio access network, wherein the second downlink message carries a first public land mobile network identifier, a third target identifier, the first target identifier and the first network service type, wherein the third target identifier is allocated by the third core network element for processing the second non-access stratum message to the terminal for the first network service type;
updating the first target identifier in a historical storage with the third target identifier according to the first target identifier.

12. The message transmission method according to claim 3, wherein the first non-access stratum message carries a protocol data unit session identifier, wherein the first core network element is a session management function, and the first data further comprises the protocol data unit session identifier, and the protocol data unit session identifier is used to identify a protocol data unit session that the terminal requests for the first network service type.

13. The message transmission method according to claim 1 or 2, further comprising:
receiving a third downlink message sent by a radio access network, wherein the third downlink message carries the first data;
determining a service type according to the first data and responding accordingly.

14. The message transmission method according to claim 1 or 2, further comprising:
receiving a configuration update command message sent by the first core network element, wherein the configuration update command message carries a third public land mobile network identifier, a fourth target identifier, a third network service type, and a fifth target identifier;
determining the corresponding stored first data according to the third public land mobile network identifier, the third network service type and the fourth target identifier;
replacing a stored fifth target identifier with the fourth target identifier.

15. The message transmission method according to claim 1 or 2, wherein the first target identifier has a validity period.

16. The message transmission method according to claim 1 or 2, further comprising: deleting the first target identifier under at least one of the following conditions:
receiving a target identifier for replacing the first target identifier;
the first target identifier exceeds a set validity period;
registration times of using the first target identifier exceed a preset number of times;
an initial registration of using the first target identifier is rejected by a corresponding core network element.

17. The message transmission method according to claim 1 or 2, further comprising:
storing the first data in a universal subscriber identity module and/or a non-volatile memory, wherein during the validity period of the first target identifier, the terminal performs the operation of turning on and then turning off the power, and the first data is retained and valid.

18. A message transmission method, **characterized in that**, applied to a radio access network, wherein the message transmission method comprises:
receiving a second uplink message sent by a terminal, wherein the second uplink message carries a first target identifier, a first network service type and a second non-access stratum message, wherein the second non-access stratum message carries the first target identifier, the radio access network is used for transparent transmission of a non-access stratum message, and the first target identifier is allocated by a first core network element for the terminal;
determining the first core network element according to the first target identifier and the first network service type;
sending the second non-access stratum message to the first core network element, wherein the first target identifier is used for the first core network element to determine the terminal.

19. The message transmission method according to claim 18, after determining the first core network element according to the first target identifier and the first network service type, further comprising:
determining a third core network element when the first core network element is unable to provide services for the terminal;
sending the second non-access stratum message to the third core network element, wherein the second non-access stratum message is used to indicate the third core network element to acquire terminal information from a relevant network element and allocate a third target identifier to the terminal according to the terminal information;
receiving the third target identifier sent by the third core network element, and sending the second downlink message to the terminal, wherein the second downlink message carries a first public land mobile network identifier, the third target identifier, the first target identifier, and the first network service type, wherein the second downlink message is used to indicate the terminal to update the first target identifier in a historical storage with the third target identifier.

20. A message transmission method, **characterized in that**, applied to a first core network element, wherein the message transmission method comprises:
receiving a first non-access stratum message sent by a radio access network, wherein the first non-access stratum message is sent after the radio access network receives a first uplink message from a terminal, the first uplink message carries a first network service type and a first non-access stratum message, and the first network service type is used to indicate the radio access network to determine a first core network element corresponding to the first network service type;
allocating a first target identifier for the terminal according to the first non-access stratum message;
sending a first downlink message to the terminal through a radio access network, wherein the first downlink message carries a target access stratum message, wherein the target access stratum message carries first data, wherein the first data comprises: a first target identifier and a first network service type, wherein the first downlink message is used to indicate the terminal to store the first data.

21. The message transmission method according to claim 20, further comprising:
sending a third downlink message to the terminal, wherein the third downlink message carries the first data, and the first data is used to indicate the terminal to determine a service type and respond accordingly.

22. A message transmission apparatus, **characterized in that**, applied to a terminal, wherein the message transmission apparatus comprises:
a storing module, configured to store first data, wherein the first data comprises: a first network service type and a first target identifier corresponding to the first network type, wherein the first target identifier is an identifier, which is allocated by a first core network element for the terminal, oriented to the first network service type, wherein the first target identifier is carried when the terminal initiates a request corresponding to the first network type.

23. The message transmission apparatus according to claim 22, wherein the first data further comprises a first public land mobile network identifier, and the first core network element belongs to the first public land mobile network.

24. The message transmission apparatus according to claim 22 or 23, further comprising:
a sending module, configured to, before storing the first data, send a first uplink message to a radio access network, wherein the first uplink message carries the first network service type and a first non-access stratum message, wherein the first network service type is used to indicate the radio access network to determine a first core network element corresponding to the first network service type, and the first non-access stratum message is used to indicate the first core network element to allocate the first target identifier to the terminal;
a receiving module, configured to receive a first downlink message, wherein the first downlink message carries the first data.

25. The message transmission apparatus according to claim 22 or 23, further comprising:
a sending module, configured to, after storing the first data, send a second uplink message to a radio access network, wherein the second uplink message carries the first target identifier, the first network service type and a second non-access stratum message, wherein the second non-access stratum message carries the first target identifier, and the radio access network is used for transparent transmission of a non-access stratum message;
wherein the second uplink message is used to indicate the radio access network to determine the first core network element according to the first target identifier and the first network service type, and send the second non-access stratum message to the first core network element, wherein the first target identifier is used for the first core network element to determine the terminal.

26. The message transmission apparatus according to claim 24, wherein the first non-access stratum message carries a terminal identifier of the terminal, and the terminal identifier is used for the first core network element to determine the terminal.

27. The message transmission apparatus according to claim 26, wherein the terminal identifier comprises: a user hidden identifier and/or a permanent device identifier.

28. The message transmission apparatus according to claim 24, wherein the first uplink message further carries a first public land mobile network identifier;
the first public land mobile network identifier and the first network service type are used to indicate the radio access network to determine the first core network element.

29. The message transmission apparatus according to claim 24, wherein the first non-access stratum message carries a second network service type and/or a second target identifier corresponding to the second network service type;
wherein the first non-access stratum message is used to indicate the first core network element to acquire terminal information from a corresponding target network element and allocate a first target identifier according to the terminal information, and the target network element stores the terminal information.

30. The message transmission apparatus according to claim 29, wherein the first non-access stratum message further carries a second public land mobile network identifier;
wherein the second public land mobile network identifier, a second network service type and the second target identifier are used to indicate a first core network element to acquire terminal information from a target network element in the second public land mobile network and allocate the first target identifier for the terminal according to the terminal information.

31. The message transmission apparatus according to claim 30, wherein the target network element comprises at least one of: a unified data management function, a unified data warehouse function, or a core network element determined by the second target identifier and the second network service type.

32. The message transmission apparatus according to claim 25, further comprising:
a receiving module, configured to, after sending the second uplink message to the radio access network, receive a second downlink message sent by the radio access network, wherein the second downlink message carries a first public land mobile network identifier, a third target identifier, the first target identifier and the first network service type, wherein the third target identifier is allocated by the third core network element for processing the second non-access stratum message to the terminal for the first network service type;
an updating module, configured to update the first target identifier in a historical storage with the third target identifier according to the first target identifier.

33. The message transmission apparatus according to claim 24, wherein the first non-access stratum message carries a protocol data unit session identifier, wherein the first core network element is a session management function, and the first data further comprises the protocol data unit session identifier, and the protocol data unit session identifier is used to identify a protocol data unit session that the terminal requests for the first network service type.

34. The message transmission apparatus according to claim 22 or 23, further comprising:
a receiving module, configured to receive a third downlink message sent by a radio access network, wherein the third downlink message carries the first data;
a responding module, configured to determine a service type according to the first data and respond accordingly.

35. The message transmission apparatus according to claim 22 or 23, further comprising:
a receiving module, configured to receive a configuration update command message sent by the first core network element, wherein the configuration update command message carries a third public land mobile network identifier, a fourth target identifier, a third network service type, and a fifth target identifier;
a determining module, configured to determine the corresponding stored first data according to the third public land mobile network identifier, the third network service type and the fourth target identifier;
a replacing module, configured to replace a stored fifth target identifier with the fourth target identifier.

36. The message transmission apparatus according to claim 22 or 23, wherein the first target identifier has a validity period.

37. The message transmission apparatus according to claim 22 or 23, further comprising:
a deleting module, configured to delete the first target identifier under at least one of the following conditions:
receiving a target identifier for replacing the first target identifier;
the first target identifier exceeds a set validity period;
registration times of using the first target identifier exceed a preset number of times; or
an initial registration of using the first target identifier is rejected by a corresponding core network element.

38. The message transmission apparatus according to claim 22 or 23, further comprising:
a storing module, configured to store the first data in a universal subscriber identity module and/or a non-volatile memory, wherein during the validity period of the first target identifier, the terminal performs the operation of turning on and then turning off the power, and the first data is retained and valid.

39. A message transmission apparatus, **characterized in that**, applied to a radio access network, wherein the message transmission apparatus comprises:
a receiving module, configured to receive a second uplink message sent by a terminal, wherein the second uplink message carries a first target identifier, a first network service type and a second non-access stratum message, wherein the second non-access stratum message carries the first target identifier, the radio access network is used for transparent transmission of a non-access stratum message, and the first target identifier is allocated by a first core network element for the terminal;
a determining module, configured to determine the first core network element according to the first target identifier and the first network service type;
a sending module, configured to send the second non-access stratum message to the first core network element, wherein the first target identifier is used for the first core network element to determine the terminal.

40. The message transmission apparatus according to claim 39, wherein the determining module is further configured to, after determining the first core network element according to the first target identifier and the first network service type, determine a third core network element when the first core network element is unable to provide services for the terminal;
the sending module is further configured to send the second non-access stratum message to the third core network element, wherein the second non-access stratum message is used to indicate the third core network element to acquire terminal information from a relevant network element and allocate a third target identifier to the terminal according to the terminal information;
the receiving module is further configured to receive the third target identifier sent by the third core network element, and sending the second downlink message to the terminal, wherein the second downlink message carries a first public land mobile network identifier, the third target identifier, the first target identifier, and the first network service type, wherein the second downlink message is used to indicate the terminal to update the first target identifier in a historical storage with the third target identifier.

41. A message transmission apparatus, **characterized in that**, applied to a first core network element, wherein the message transmission apparatus comprises:
a receiving module, configured to receive a first non-access stratum message sent by a radio access network, wherein the first non-access stratum message is sent after the radio access network receives a first uplink message from a terminal, the first uplink message carries a first network service type and a first non-access stratum message, and the first network service type is used to indicate the radio access network to determine a first core network element corresponding to the first network service type;
an allocating module, configured to allocate a first target identifier for the terminal according to the first non-access stratum message;
a sending module, configured to send a first downlink message to the terminal through a radio access network, wherein the first downlink message carries a target access stratum message, wherein the target access stratum message carries first data, wherein the first data comprises: a first target identifier and a first network service type, wherein the first downlink message is used to indicate the terminal to store the first data.

42. The message transmission apparatus according to claim 41, wherein the sending module is further configured to send a third downlink message to the terminal, wherein the third downlink message carries the first data, and the first data is used to indicate the terminal to determine a service type and respond accordingly.

43. A message transmission apparatus, **characterized in that**, applied to a terminal, wherein the message transmission apparatus comprises a memory, a transceiver, and a processor;
wherein the memory is configured to store a computer program;
the transceiver is configured to send and receive data under a control of the processor;
the processor is configured to read the computer program in the memory and perform following operations:
storing first data, wherein the first data comprises: a first network service type and a first target identifier corresponding to the first network type, wherein the first target identifier is an identifier, which is allocated by a first core network element for the terminal, oriented to the first network service type, wherein the first target identifier is carried when the terminal initiates a request corresponding to the first network type.

44. A message transmission apparatus, **characterized in that**, applied to a radio access network, wherein the message transmission apparatus comprises a memory, a transceiver, and a processor;
wherein the memory is configured to store a computer program;
the transceiver is configured to send and receive data under a control of the processor;
the processor is configured to read the computer program in the memory and perform following operations:
receiving a second uplink message sent by a terminal, wherein the second uplink message carries a first target identifier, a first network service type and a second non-access stratum message, wherein the second non-access stratum message carries the first target identifier, the radio access network is used for transparent transmission of a non-access stratum message, and the first target identifier is allocated by a first core network element for the terminal;
determining the first core network element according to the first target identifier and the first network service type;
sending the second non-access stratum message to the first core network element, wherein the first target identifier is used for the first core network element to determine the terminal.

45. A message transmission apparatus, **characterized in that**, applied to a first core network element, wherein the message transmission apparatus comprises a memory, a transceiver, and a processor;
wherein the memory is configured to store a computer program;
the transceiver is configured to send and receive data under a control of the processor;
the processor is configured to read the computer program in the memory and perform following operations:
receiving a first non-access stratum message sent by a radio access network, wherein the first non-access stratum message is sent after the radio access network receives a first uplink message from a terminal, the first uplink message carries a first network service type and a first non-access stratum message, and the first network service type is used to indicate the radio access network to determine a first core network element corresponding to the first network service type;
allocating a first target identifier for the terminal according to the first non-access stratum message;
sending a first downlink message to the terminal through a radio access network, wherein the first downlink message carries a target access stratum message, wherein the target access stratum message carries first data, wherein the first data comprises: a first target identifier and a first network service type, wherein the first downlink message is used to indicate the terminal to store the first data.

46. A processor-readable storage medium, **characterized in that**, the processor-readable storage medium stores a computer program, and the computer program is used to cause the processor to execute the message transmission method according to any one of claims 1 to 21.
